# EUROPÄISCHE PATENTSCHRIFT

(11) **EP 3 338 347 B1**
(45) Veröffentlichungstag und Bekanntmachung des Hinweises auf die Patenterteilung: **19.05.2021**
(21) Anmeldenummer: 16750752.4
(22) Anmeldetag: 04.08.2016
(51) Int. Cl.: F02B 37/18, F02B 37/24, F02M 35/10, F02M 26/54, H02K 7/116, F16H 1/20, F16K 31/04

(54) **STELLER ZUM VERSTELLEN EINES STELLORGANS**
ACTUATOR FOR ADJUSTING AN ACTUATING ELEMENT
ACTIONNEUR POUR ACTIONNER UN ORGANE DE RÉGLAGE

(30) Priorität: 18.08.2015 DE 102015215732
(43) Veröffentlichungstag der Anmeldung: 27.06.2018
(73) Patentinhaber: Mahle International GmbH, 70376 Stuttgart (DE)
(72) Erfinder: NIEKAMP, Peer, 71397 Leutenbach (DE)
(74) Vertreter: BRP Renaud & Partner mbB Rechtsanwälte Patentanwälte Steuerberater
(86) Internationale Anmeldenummer: PCT/EP2016/068669
(87) Internationale Veröffentlichungsnummer: WO 2017/029124

(56) Entgegenhaltungen:
- EP-A2- 1 582 776
- CN-A- 102 797 795
- DE-U1- 8 702 420
- FR-A1- 2 962 179
- JP-A- H05 196 113
- US-A1- 2004 103 733
- US-A1- 2009 039 725

## Beschreibung

Die vorliegende Erfindung betrifft ein Kraftfahrzeug mit einem Steller zum Verstellen eines Stellorgans des Kraftfahrzeugs.

Gattungsgemäße Steller dienen dem Zweck, ein Stellorgan zu verstellen. Hierzu weisen derartige Steller gewöhnlich einen Stellmotor auf, der eine Antriebswelle antreibt. Dieser Antrieb ist über ein Getriebe auf eine Abtriebswelle übertragbar, die mit einem solchen Stellorgan verbunden ist und das Stellorgan somit verstellt. Derartige Getriebe sind gewöhnlich mit ineinandergreifenden Zahnrädern zum Übertragen des Antriebs ausgestattet, die insbesondere eine Übersetzung des Antriebs ermöglichen.

Ein solcher Steller ist beispielsweise aus der DE 299 01 516 U1 bekannt. Dieser Steller dient dem Verstellen einer Drosselklappe eines Kraftfahrzeugs als Stellorgan und weist einen Stellmotor mit einer Antriebswelle auf, deren Antrieb über ein dreistufiges Getriebe auf eine Abtriebswelle übertragen wird. Hierzu ist zwischen der Antriebswelle und der Abtriebswelle eine Getriebewelle angeordnet, wobei die jeweilige Welle mit zumindest einem Zahnrad versehen ist, das in ein Zahnrad der radial benachbarten Welle eingreift.

Weitere Steller für Kraftfahrzeuge sind aus der EP 1 582 776 A2 und der US 2004/0103733 A1 bekannt.

Die FR 2 962 179 A1 offenbart eine Kraftfahrzeug mit einem Elektromotor zum Antreiben eines Kraftfahrzeugs. Der Elektromotor ist über eine Getriebe mit Rädern des Kraftfahrzeugs verbunden. Das Getriebe weist zwei achsparalle Wellen auf, auf denen jeweils ein Zwischentrieb drehfest und ein Zwischentrieb drehbar angeordnet sind.

Aus der DE 87 02 420 U1 ist ein Getriebe für ein Kraftfahrzeug bekannt, das zwei achsparallele Wellen aufweist. Auf der jeweiligen Welle ist ein Zwischentrieb drehfest und ein Zwischentrieb drehbar angeordnet.

Aus der EP 1 662 120 B1 ist ein Steller zum Verstellen einer Drosselklappe als Stellorgan eines Kraftfahrzeugs bekannt, der einen Stellmotor mit einer Antriebswelle sowie zwei Getriebewellen aufweist, wobei die Getriebewellen und die Antriebswelle jeweils radial beabstandet sind und ineinandergreifende Zahnräder aufweisen, die ein mehrstufiges Getriebe ausbilden. Eine Abtriebswelle des Stellers ist koaxial zu einer der Getriebewellen und relativ zu dieser Getriebewelle drehbar gelagert.

Bei Stellern aus dem Stand der Technik ist also zur Realisierung eines mehrstufigen Getriebes eine steigende Anzahl von achsparallel und radial beabstandeten Wellen notwendig. Dabei gilt, je mehr Stufen, desto mehr solche Wellen werden benötigt.

In einem Kraftfahrzeug ist auf eine Reduzierung des Bauraumbedarfs eines solchen Stellers und/oder eine Reduzierung des Gewichts des Stellers zu achten. Diese Anforderungen stehen jedoch im Widerspruch zum steigenden Bauraumbedarf und/oder Gewicht der Steller bei mehrstufigen Getrieben.

Die vorliegende Erfindung beschäftigt sich daher mit dem Problem, für ein Kraftfahrzeug mit einem Steller der eingangs genannten Art eine verbesserte oder zumindest andere Ausführungsform anzugeben, die sich durch einen verringerten Bauraumbedarf und/oder ein reduziertes Gewicht auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Kraftfahrzeug mit einem Steller zum Verstellen eines Stellorgans des Kraftfahrzeugs, zumindest einen Zwischentrieb zum Ausbilden eines Getriebes des Stellers koaxial zu einer Abtriebswelle des Stellers anzuordnen und relativ zur Abtriebswelle drehbar zu lagern sowie zumindest einen anderen Zwischentrieb zum Ausbilden des Getriebes achsparallel zu einer Antriebswelle des Stellers und relativ zur Antriebswelle drehbar zu lagern. Hierdurch kann zumindest ein solcher Zwischentrieb koaxial zur Abtriebswelle angeordnet werden, so dass eine radial beabstandete Anordnung dieses zumindest einen Zwischentriebs zur Abtriebswelle entfällt. Insbesondere können zusätzliche, radial zur Abtriebswelle beabstandet angeordnete Getriebewellen zum Lagern dieser Zwischentriebe entfallen. In der Folge kommt es zu einem reduzierten Bauraumbedarf des Stellers, insbesondere einem reduzierten Bauraumbedarf in radialer Richtung. Zudem führt der Entfall besagter Getriebewellen zu einem reduzierten Gewicht des Stellers.

Dem Erfindungsgedanken entsprechend, weist der Steller einen Stellmotor auf, der die Antriebswelle aufweist und antreibt. Die Antriebswelle ist also eine Motorwelle des Stellmotors. Die Abtriebswelle ist achsparallel und radial beabstandet zur Antriebswelle angeordnet und drehbar gelagert. An der Antriebswelle ist ein Eingangs-Zahnrad angebracht, während an der Abtriebswelle ein Ausgangs-Zahnrad angebracht ist. Das Eingangs-Zahnrad bildet dabei das erste Glied der Zahnräder des Getriebes, während das Ausgangs-Zahnrad das letzte Glied der Zahnräder des Getriebes bildet und die Abtriebswelle dreht. Die Drehung der Abtriebswelle wird dabei zum Verstellen des Stellorgans eingesetzt. Der Steller weist ferner zumindest einen solchen Zwischentrieb auf, der achsparallel zur Antriebswelle angeordnet ist und relativ zur Antriebswelle drehbar gelagert ist. Ein solcher Zwischentrieb wird nachfolgend als Antriebs-Zwischentrieb bezeichnet. Der jeweilige Antriebs-Zwischentrieb weist ein erstes Antriebs-Zahnrad und ein zweites Antriebs-Zahnrad auf, die axial benachbart angeordnet und drehfest miteinander verbunden sind. Der Steller weist zudem zumindest einen solchen Zwischentrieb auf, der koaxial zur Abtriebswelle angeordnet und relativ zur Abtriebswelle drehbar gelagert ist und nachfolgend als Abtriebs-Zwischentrieb bezeichnet wird. Der jeweilige Abtriebs-Zwischentrieb weist ein erstes Abtriebs-Zahnrad und ein zweites Abtriebs-Zahnrad auf, die axial benachbart angeordnet und drehfest miteinander verbunden sind. Dabei steht eines der Abtriebs-Zahnräder eines solchen Abtriebs-Zwischentriebs mit dem drehfest an der Antriebswelle angebrachten Eingangs-Zahnrad in Eingriff, während eines der Antriebs-Zahnräder eines solchen Antriebs-Zwischentriebs mit dem drehfest an der Abtriebswelle angebrachten Ausgangs-Zahnrad in Eingriff steht. Das heißt, dass die Drehung der Antriebswelle über das Eingangs-Zahnrad auf die Zwischentriebe übertragen wird, die diesen Antrieb über das Ausgangs-Zahnrad auf die Abtriebswelle übertragen. Hierzu stehen die übrigen Antriebs-Zahnräder, d.h. alle Antriebs-Zahnräder außer dem mit dem Ausgangs-Zahnrad in Eingriff stehenden Antriebs-Zahnrad, jeweils mit einem solchen Abtriebs-Zahnrad mit Ausnahme des mit dem Eingangs-Zahnrad in Eingriff stehenden Abtriebs-Zahnrads, in Eingriff.

Der jeweilige Antriebs-Zwischentrieb kann grundsätzlich radial von der Antriebswelle beabstandet angeordnet sein. Bevorzugt sind hierbei Ausführungsformen, bei denen zumindest ein solcher Antriebs-Zwischentrieb radial näher an der Antriebswelle angeordnet ist als an der Abtriebswelle. Insbesondere ist zumindest ein solcher Antriebs-Zwischentrieb auf der von der Abtriebswelle abgewandte Seite der Antriebswelle radial zur Antriebswelle versetzt angeordnet.

Bei bevorzugten Varianten ist zumindest ein solcher Antriebs-Zwischentrieb koaxial zur Antriebswelle angeordnet. Hierdurch können insbesondere zusätzliche, radial zur Antriebswelle beabstandet angeordnete Getriebewellen zum Lagern dieses zumindest einen Abtriebs-Zwischentriebs entfallen. In der Folge kommt es zu einer weiteren Reduzierung des Bauraumbedarfs des Stellers, insbesondere in radialer Richtung. Besonders bevorzugt ist es dabei, wenn alle Antriebs-Zwischentriebe koaxial zur Antriebswelle angeordnet sind.

Vorteilhaft ist es, wenn der Steller außer dem zumindest einem Antriebs-Zwischentrieb und dem zumindest einen Abtriebs-Zwischentrieb keine weiteren Zwischentriebe aufweist. Das heißt, dass der Steller ausschließlich zumindest einen solchen Antriebs-Zwischentrieb und zumindest einen solchen Abtriebs-Zwischentrieb aufweist. Das heißt auch, dass alle Zwischentriebe jeweils koaxial zur Antriebswelle oder koaxial zur Abtriebswelle angeordnet sein können. Hierdurch kommt es zu einer weiteren Reduzierung des Bauraumbedarfs des Stellers, insbesondere des Bauraumbedarfs in radialer Richtung.

Bevorzugt ist es ferner, wenn die Anzahl der Antriebs-Zwischentriebe der Anzahl der Abtriebs-Zwischentriebe entspricht. Hierdurch stehen sämtliche Antriebs-Zahnräder und Abtriebs-Zahnräder mit zumindest einem solchen Zahnrad in Eingriff.

Prinzipiell kann der jeweilige Zwischentrieb mehrstückig ausgebildet sein. Insbesondere ist es vorstellbar, die Zahnräder zumindest eines solchen Zwischentriebs axial beabstandet anzuordnen. Vorteilhaft sind Zwischentriebe, die einstückig ausgebildet sind. Die Zwischentriebe können also insbesondere materialeinheitlich ausgebildet sein. Hierdurch kommt es zu einer stabilen Ausbildung der Zwischentriebe und somit des Stellers und einem reduzierten axialen Bauraumbedarf des Stellers.

Zur weiteren Reduzierung des Bauraumbedarfs und/oder zur verbesserten Übertragung des Antriebs auf die Antriebswelle ist es bevorzugt, wenn der Stellmotor koaxial zur Antriebswelle angeordnet ist. Dabei kann der Stellmotor beliebig ausgebildet sein. Der Stellmotor kann insbesondere elektrisch betrieben sein.

Prinzipiell können die Zahnräder des jeweiligen Zwischentriebs einen gleichen Außendurchmesser und/oder eine gleiche Anzahl an Zähnen aufweisen.

Bevorzugt ist es, wenn die Zahnräder zumindest einer der Zwischentriebe unterschiedliche Außendurchmesser und/oder eine unterschiedliche Anzahl an Zähnen aufweisen. Hierdurch lässt sich mittels des Zwischentriebs eine Übersetzung des Antriebs realisieren. Insbesondere können ineinandergreifende Zahnräder unterschiedliche Außendurchmesser und/oder unterschiedliche viele Zähne aufweisen. Weisen ineinandergreifende Zahnräder unterschiedliche Außendurchmesser und/oder eine unterschiedliche Anzahl an Zähnen auf, so wird das Zahnrad mit dem kleineren Außen-Durchmesser und/oder der geringeren Anzahl an Zähnen üblicherweise als Ritzel bezeichnet. Dementsprechend weist ein solches Getriebe mit ineinandergreifenden Zahnrädern unterschiedlicher Außendurchmesser und/oder unterschiedlich vielen Zähnen zumindest ein solches Zahnrad und zumindest ein solches Ritzel auf.

Die Lagerung des jeweiligen Zwischentriebs drehbar zur zugehörigen Welle kann prinzipiell beliebig realisiert sein.

Vorstellbar ist es, dass zumindest ein solcher Zwischentrieb an der zugehörigen Welle gelagert ist. Das heißt, dass zumindest ein solcher Antriebs-Zwischentrieb an der Antriebswelle gelagert sein kann. Entsprechend ist es vorstellbar, dass zumindest ein solcher Abtriebs-Zwischentrieb drehbar an der Abtriebs-Welle gelagert ist. Hierdurch wird die entsprechende Welle also nicht nur zur Übertragung der Drehbewegung bzw. eines Drehmoments, sondern auch zur Lagerung des entsprechenden Zwischentriebs eingesetzt.

Die erfindungsgemäße Lösung erlaubt es ferner, das Eingangs-Zahnrad und das Ausgangs-Zahnrad axial beliebig anzuordnen und die Zwischentriebe axial relativ zum Eingangs-Zahnrad und zum Ausgangs-Zahnrad beliebig zu positionieren.

Bei bevorzugten Ausführungsformen ist der jeweilige Antriebs-Zwischentrieb mit dem axial nächstbenachbarten Abtriebs-Zwischentrieb in Eingriff. Dementsprechend ist der jeweilige Abtriebs-Zwischentrieb mit dem axial nächstbenachbarten Antriebs-Zwischentrieb in Eingriff. Hierdurch können die Stufen des Getriebes entlang der axialen Ausdehnung des Stellers benachbart realisiert sein.

Vorstellbar ist es hierbei, dass das Eingangs-Zahnrad und das Ausgangs-Zahnrad an axial gegenüberliegenden Seiten des Getriebes angeordnet sind. Vorstellbar ist es jedoch auch, dass auf der axial vom Eingangs-Zahnrad abgewandten Seite des Ausgangs-Zahnrads zumindest ein solcher Abtriebs-Zwischentrieb angeordnet ist und/oder dass auf der axial vom Ausgangs-Zahnrad abgewandten Seite des Eingangs-Zahnrads ein solcher Antriebs-Zwischentrieb angeordnet ist.

Erfindungsgemäß ist axial zwischen dem Eingangs-Zahnrad und dem Stellmotor zumindest ein solcher Antriebs-Zwischentrieb angeordnet. Dabei ist es insbesondere vorstellbar, diesen Antriebs-Zwischentrieb an der Antriebswelle zu lagern.

Bei weiteren Varianten ist zumindest ein solcher Zwischentrieb an einer Lagerwelle oder einem Stift drehbar gelagert. Das heißt, dass wenigstens ein solcher Abtriebs-Zwischentrieb an einem zugehörigen, drehfest im Steller angeordneten Stift gelagert sein kann. Dieser Stift ist bevorzugt koaxial zur Abtriebswelle angeordnet, wobei die Abtriebswelle relativ zu diesem Stift drehbar ist. Insbesondere ist es vorstellbar, diesen Stift starr im Steller anzuordnen.

Vorstellbar ist es zudem, wenigstens einen solchen Antriebs-Zwischentrieb an einem drehfest im Steller angeordneten Stift zu lagern, wobei die Antriebswelle relativ zum Stift drehbar ist. Das heißt, dass Antriebswelle und Stift separate Bestandteile des Stellers sind. Dabei kann der Stift insbesondere starr im Steller angeordnet sein. Der Stift ist achsparallel zur Antriebswelle angeordnet. Das heißt, dass der Stift zur Antriebswelle radial versetzt angeordnet sein kann. Hierdurch ist es auch möglich, einen besseren Spielausgleich zwischen Antriebswelle, Abtriebswelle und Stift und/oder eine verringerte Verspannung zwischen Antriebswelle, Abtriebswelle und Stift zu erzielen. Bevorzugt ist es, wenn der Stift und die Antriebwelle koaxial angeordnet sind. Die koaxiale Anordnung des Stifts zur Antriebswelle führt insbesondere zu einer kompakteren Bauweise des Stellers.

Ein solcher Stift, an dem ein solcher Antriebs-Zwischentrieb gelagert ist, ist vorteilhaft radial im Steller gelagert. Dabei ist es vorstellbar, dass eine topfförmige oder glockenförmige Abdeckung das Eingangs-Zahnrad zumindest bereichsweise umgibt und eine axial vom Eingangs-Zahnrad beabstandete und radial verlaufende Deckenwand aufweist, die eine Lageröffnung umfasst, Dabei kann der Stift in besagter Lageröffnung radial gelagert sein. Die Lageröffnung ist koaxial zum Stift angeordnet. Das heißt, dass die Lageröffnung achsparallel, vorzugsweise koaxial zur Antriebswelle angeordnet ist. Vorstellbar ist es auch, die Lagerwelle in einem von der Lageröffnung beabstandeten Lagerbereich zusätzlich radial zu lagern. Die jeweilige radiale Lagerung verhindert hierbei insbesondere, dass zwischen dem zugehörigen Antriebs-Zwischentrieb und dem damit in Eingriff stehenden Abtriebs-Zwischentrieb und/oder dem Ausgangs-Zahnrad radiale Spannungen entstehen, welche zu einer Biegespannung und zu einer Betriebsbeeinträchtigung des Stellers führen können.

Das jeweilige Zahnrad kann prinzipiell in Radialrichtung geschlossen ausgebildet sein.

Erfindungsgemäß ist zumindest ein solches Zahnrad als ein Zahnradsegment ausgebildet. Das heißt, dass zumindest eines der Zahnräder sich in Umfangsrichtung um weniger als 360° erstreckt. Insbesondere ist es vorstellbar, das Ausgangs-Zahnrad als ein solches Zahnradsegment auszubilden. Hierdurch können insbesondere weitere Gewichtsersparnisse erzielt werden.

Der Steller weist bevorzugt ein Stellergehäuse auf, in dem die Komponenten des Stellers angeordnet sein können. Im Stellergehäuse können insbesondere die Antriebswelle, die Abtriebswelle, die Zwischentriebe sowie das Eingangs-Zahnrad und das Ausgangs-Zahnrad angeordnet sein. Vorstellbar ist es auch, den Stellmotor im Stellergehäuse anzuordnen.

Das Stellergehäuse kann ein erstes Gehäuseteil und ein zweites Gehäuseteil aufweisen. Dabei kann das zweite Gehäuseteil das erste Gehäuseteil verschließen. Das Gehäuse kann dabei auch aus weiteren Gehäuseteilen bestehen. Insbesondere ist es vorstellbar, das erste Gehäuseteil als einen Gehäusetopf und das zweite Gehäuseteil als einen den Gehäusetopf verschließenden Gehäusedeckel auszubilden. Dabei können die Antriebswelle und/oder die Abtriebswelle im Gehäuse drehbar gelagert sein. Insbesondere ist es vorstellbar, die Abtriebswelle im ersten Gehäuseteil, im zweiten Gehäuseteil oder in beiden Gehäuseteilen drehbar zu lagern. Vorstellbar ist es insbesondere, die Abtriebswelle ausschließlich in einem der Gehäuseteile drehbar zu lagern.

Die Abtriebswelle ist vorteilhaft durch das Gehäuse, insbesondere durch eines der Gehäuseteile, geführt, durchragt dieses insbesondere. Hierdurch kann die Drehung der Abtriebswelle außerhalb des Stellergehäuses abgegriffen und zum Verstellen des Stellorgans eingesetzt werden. Die Abtriebswelle kann dabei in der axial vom Stellmotor entgegengesetzten Richtung durch das Stellergehäuse geführt sein. Vorstellbar ist es auch, dass die Abtriebswelle auf der axial gleichen Seite des Stellergehäuses aus dem Stellergehäuse geführt ist, auf der der Stellmotor angeordnet ist.

Das erste Gehäuseteil, insbesondere der Gehäusetopf, weist bevorzugt einen Topf auf, in dem der Stellmotor angeordnet ist. Somit wird eine wesentliche räumliche Trennung zwischen dem Stellmotor und den Zwischentrieben bzw. dem Getriebe erreicht.

Der Topf weist vorzugsweise auf der dem zweiten Gehäuseteil zugewandten Seite einen Topfboden auf, der eine Topföffnung für die Antriebswelle aufweist. Auf der dem Topfboden gegenüberliegenden Seite ist der Topf offen ausgebildet bzw. weist eine Montageöffnung auf, durch die der Stellmotor in den Topf montiert, insbesondere eingeschoben, werden kann. Somit ist es insbesondere möglich, den Stellmotor samt Antriebswelle durch die Montageöffnung in das erste Gehäuseteil zu montieren, währende die übrigen Wellen, Zwischentriebe und der Stift von der gegenüberliegenden Seite in das Gehäuse montiert werden. Somit ergibt sich eine verbesserte Ausrichtung des Stellmotors. Sind die Abtriebswelle und/oder der Stift im ersten Gehäuseteil gelagert, ergibt sich eine besonders vorteilhafte und exakte Ausrichtung des Stellmotors.

Bei vorteilhaften Ausführungsformen weist der Steller einen Magnet sowie einen mit dem Magnet zusammenwirkenden Magnetsensor auf, die der Bestimmung einer Drehzahl und/oder eines Drehmoments und/oder einer Drehgeschwindigkeit der Abtriebswelle dienen.

Bevorzugt ist der Magnet, insbesondere drehfest, an der Abtriebswelle angebracht. Bevorzugt ist es zudem, wenn der Magnetsensor beabstandet zur Abtriebswelle im Stellergehäuse angeordnet, insbesondere am Stellergehäuse angebracht, ist.

Als vorteilhaft erweisen sich Varianten, bei denen der Steller mit einer vom Stellergehäuse separaten Lagereinrichtung zur Lagerung der Abtrieswelle versehen ist. Die Lagereinrichtung ist bevorzugt im Stellergehäuse angeordnet und/oder aufgenommen.

Denkbar ist es, dass die Lagereinrichtung ein der Lagereinrichtung zugewandtes Ende der Abtriebswelle aufnimmt. Bevorzugt ist es, wenn die Lagereinrichtung auch den Magnet aufnimmt, der wiederrum in der Abtriebswelle aufgenommen sein kann.

Bevorzugt sind dabei Ausführungsformen, bei denen die Lagereinrichtung zumindest einen Abschnitt aufweist, der zwischen dem Magnet und dem Magnetsensor angeordnet ist, um insbesondere elektrostatische Entladungen zu verhindern oder zumindest zu reduzieren. Somit werden also insbesondere entsprechende Beschädigungen und/oder Beeinträchtigungen des Magnetsensors vermieden.

Vorstellbar ist es, die Lagereinrichtung mit einem Boden zu versehen, der zwischen dem Magnet und dem Magnetsensor angeordnet ist.

Dabei kann die Lagereinrichtung topfförmig ausgebildet sein wobei der Boden ein Lagerboden der Lagereinrichtung ist, der axial zwischen dem Magnet und dem Magnetsensor angeordnet ist. Der Lagerboden ist vorteilhaft axial benachbart zum Magnetsensor und/oder geschlossen ausgebildet.

Zu denken ist auch an Varianten, bei denen die Lagereinrichtung einen ersten Lagertopf und einen zweiten Lagertopf aufweist, die axial durch eine Trennwand der Lagereinrichtung getrennt sind, wobei das Ende der Abtriebswelle, insbesondere auch der Magnet, im ersten Lagertopf gelagert sind, der hin zur Abtriebswelle offen ist. Der Magnetsensor ist vorzugsweis vom zweiten Lagertopf umgeben, der hin zum Magnetsensor benachbart ist. Dabei kann der zweite Lagertopf den Magnetsensor sowohl gänzlich als auch bereichsweise umgeben kann.

Bei diesen Varianten können der Magnet und der Magnetsensor also axial benachbart angeordnet sein.

Der zweite Lagertopf kann eine radiale Öffnung, nachfolgend Durchführöffnung genannt, aufweisen, die es erlaubt, den Magnetsensor in den zweiten Lagertopf einzubringen bzw. aus dem zweiten Lagertopf zu entfernen. Alternativ oder zusätzlich dient die Durchführöffnung dem Durchführen von Verbindungen, insbesondere elektrischen Verbindungen, des Magnetsensors.

Der Steller kann zum Verstellen eines beliebigen Stellorgans des Kraftfahrzeugs eingesetzt werden. Hierbei wird der Steller vorzugsweise zum Verstellen eines Stellorgans zur Dosierung bzw. Regulierung einer Fluidströmung eingesetzt.

Vorstellbar ist es beispielsweise, dass das zugehörige Kraftfahrzeug einen Abgasturbolader aufweist, wobei der Steller zum Verstellen zumindest eines Stellorgans des Abgasturboladers eingesetzt wird. Zu denken ist an Ausführungsformen, bei denen der Abgasturbolader eine variable Turbinengeometrie aufweist, wobei die variable Turbinengeometrie durch den Steller verstellt wird. Zu denken ist auch an Abgasturbolader, die ein Wastegateventil aufweisen, wobei der Steller das Wastegateventil verstellt.

Bei weiteren Ausführungsformen weist das Kraftfahrzeug eine Frischluftanlage zum Zuführen von Frischluft zu einer Brennkraftmaschine des Kraftfahrzeugs auf. Dabei ist die Frischluftanlage mit einer Klappe versehen, welche der Dosierung der Frischluftzufuhr zur Brennkraftmaschine dient. Mittels des Stellers kann hierbei eine solche Klappe, insbesondere Drosselklappe, betätigt werden. Insbesondere ist es vorstellbar, mittels des Stellers eine solche Klappe eines Saugrohrs der Frischluftanlage zu verstellen.

Das Kraftfahrzeug kann alternativ oder zusätzlich eine Abgasrückführeinrichtung zum Rückführen von Abgas zur Brennkraftmaschine aufweisen. Die Abgasrückführeinrichtung ist mit einem solchen Stellorgan versehen, die dem Dosieren der Abgasrückfuhr zur Brennkraftmaschine dient. Dabei wird ein solcher Steller zum Verstellen des Stellorgans eingesetzt. Ein solches Stellorgan kann insbesondere als ein Ventil, beispielsweise als ein Rückführventil, ausgebildet sein.

Selbstverständlich ist es auch möglich, mittels eines solchen Stellers zwei oder mehrere solche Stellorgane zu verstellen. Denkbar ist es auch, das Kraftfahrzeug mit zwei oder mehreren solchen Stellern auszustatten, wobei der jeweilige Steller zumindest ein solches Stellorgan verstellt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine stark vereinfachte, schaltplanartige Darstellung eines Kraftfahrzeugs,
- Fig. 2: einen Schnitt durch einen Steller des Kraftfahrzeugs, der nicht zum Umfang der Erfindung gehört,
- Fig. 3: einen Ausschnitt einer räumlichen Innenansicht des Stellers,
- Fig. 4: eine räumliche Innenansicht des Stellers, der nicht zum Umfang der Erfindung gehört,
- Fig. 5: die Ansicht aus Fig. 2 bei einem anderen Ausführungsbeispiel des Stellers, der nicht zum Umfang der Erfindung gehört,
- Fig. 6: den Schnitt aus Fig. 5 bei einem weiteren Ausführungsbeispiel des Stellers
- Fig. 7: eine räumliche Explosionsdarstellung des Stellers aus Fig. 2, der nicht zum Umfang der Erfindung gehört,
- Fig. 8: einen Ausschnitt aus Fig. 2 bei einem weiteren Ausführungsbeispiels des Stellers,
- Fig. 9: der Steller aus Fig. 8 bei einer räumlichen Ansicht in das Innere des Stellers,
- Fig. 10: einen Ausschnitt aus Fig. 8 bei einem anderen Ausführungsbeispiel des Stellers.

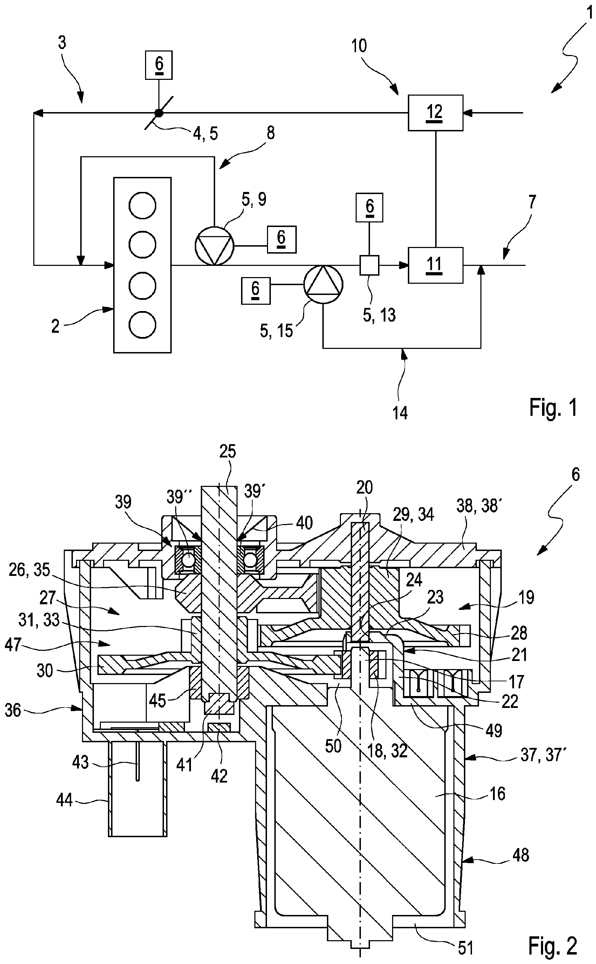

In Fig. 1 ist ein Kraftfahrzeug 1 mit einer Brennkraftmaschine 2 dargestellt, die dem Antrieb des Kraftfahrzeugs 1 dienen kann. Im Betrieb der Brennkraftmaschine 2 wird Frischluft benötigt, die der Brennkraftmaschine 2 über eine Frischluftanlage 3 zugeführt wird. Zum Dosieren der der Brennkraftmaschine 2 zugeführten Frischluft ist innerhalb der Frischluftanlage 3 ein als eine Drosselklappe 4 ausgebildetes Stellorgan 5 angeordnet. Die Drosselklappe 4 wird dabei mit Hilfe eines Stellers 6 verstellt. Im Betrieb der Brennkraftmaschine 2 entsteht Abgas, das über eine Abgasanlage 7 abgeführt wird. Mittels einer Abgasrückführeinrichtung 8 ist es möglich, Abgas der Brennkraftmaschine 2 wieder zuzuführen. Hierzu zweigt die Abgasrückführeinrichtung 8 von der Abgasanlage 7 ab und mündet in die Frischluftanlage 3. In der Abgasrückführeinrichtung 8 ist ein Rückführventil 9 als Stellorgan 5 vorgesehen, die dem Dosieren der Abgasrückfuhr zur Brennkraftmaschine 2 dient. Das Rückführventil 9 als Stellorgan 5 wird mit Hilfe eines solchen Stellers 6 verstellt. Zur Effizienzsteigerung weist das Kraftfahrzeug 1 einen Abgasturbolader 10 mit einem Turbinenrad 11 und einem Verdichterrad 12 auf. Dabei ist das Turbinenrad 11 in der Abgasanlage 7 eingebunden und treibt das in der Frischluftanlage 3 eingebundene Verdichterrad 12 an, um die der Brennkraftmaschine 2 zuzuführende Frischluft zu verdichten. Zur Variation der Beaufschlagung des Turbinenrads 11 mit Abgas weist der Abgasturbolader 10 eine variable Turbinengeometrie 13 sowie eine Wastegateventileinrichtung 14 auf. Mit Hilfe der variablen Turbinengeometrie 13 kann ein durchströmbarer Querschnitt zum Turbinenrad 11 eingestellt werden. Das Verstellen der variablen Turbinengeometrie 13 und somit das Einstellen des durchströmbaren Querschnitts erfolgt mit Hilfe eines solchen Stellers 6. Das heißt, dass die variable Turbinengeometrie 13 als Stellorgan 5 mit Hilfe des Stellers 6 verstellt wird. Die Wastegateventileinrichtung 14 zweigt stromauf des Turbinenrads 11 von der Abgasanlage 7 ab und führt stromab des Verdichterrads 11 wieder in die Abgasanlage 7 ein. Hierdurch ist es möglich, das Abgas am Verdichterrad 11 vorbeizuführen, wobei zum Dosieren des am Verdichterrad 11 vorbeigeführten Abgases ein Wastegateventil 15 als Stellorgan 5 vorgesehen ist. Das Wastegateventil 15 als Stellorgan 5 wird hierbei mit Hilfe eines solchen Stellers 6 verstellt.

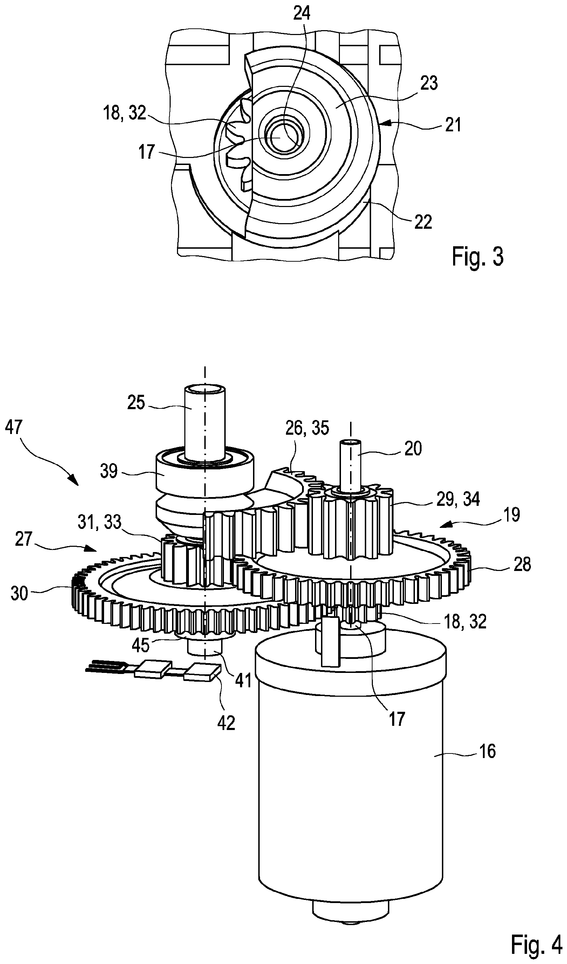

Der Steller 6 ist in den Fig. 2 bis 4 dargestellt, wobei Fig. 2 einen Schnitt durch den Steller 6 zeigt, während in Fig. 3 und in Fig. 4 unterschiedliche räumliche Innenansichten des Stellers 6 zu sehen sind, wobei in den Fig. 3 und 4 nicht alle in Fig. 2 sichtbaren Komponenten dargestellt sind. Der Steller 6 weist einen Stellmotor 16 mit einer angetriebenen Antriebswelle 17 oder Motorwelle 17 auf. Die Antriebswelle 17 ist mit einem Eingangs-Zahnrad 18 verbunden, das drehfest an der Antriebswelle 17 angebracht ist. Hierdurch kommt es bei der Drehung der Antriebswelle 17 zu einer entsprechenden Drehung des Eingangs-Zahnrads 18. Ein Antriebs-Zwischentrieb 19 ist achsparallel zur Antriebswelle 17 angeordnet und relativ zur Antriebswelle 17 drehbar gelagert. Hierzu ist ein von der Antriebswelle 17 separater Stift 20 vorgesehen, der drehfest im Steller 6 gehalten ist, so dass die Antriebswelle 17 relativ zum Stift 20 drehbar ist. Der Stift 20 ist achsparallel zur Antriebswelle 17 angeordnet und axial von der Antriebswelle 17 beabstandet. Dabei ist der Antriebs-Zwischentrieb 19 drehbar am Stift 20 gelagert. Im gezeigten Ausführungsbeispiel sind der Antriebs-Zwischentrieb 19 und der Stift 20 koaxial zur Antriebswelle 17 angeordnet. Hierdurch ist insbesondere eine kompaktere Bauweise des Stellers 6 möglich.

Wie aus den Fig. 2 und 3 hervorgeht, ist das Eingangs-Zahnrad 18 bereichsweise von einer Abdeckung 21 umgeben, die glockenförmig bzw. topfförmig ausgebildet ist. Die Abdeckung 21 weist eine in Umfangsrichtung verlaufende Seitenwand 22 und eine daran anschließende Deckenwand 23 auf, wobei die Deckenwand 23 radial und in Umfangsrichtung verläuft. In der Deckenwand 23 ist eine Lageröffnung 24 vorgesehen, die axial von der Antriebswelle 17 und vom Antriebs-Zahnrad 18 beabstandet ist koaxial zum Stift 20 angeordnet ist. Im gezeigten Beispiel ist die Lageröffnung 24 also koaxial zur Antriebswelle 17 angeordnet. Dabei ist der Stift 20 in der Lageröffnung 24 radial, beispielsweise mittels eines nicht-gezeigten Radiallagers, gelagert. In Fig. 3 ist dabei eine seitliche Draufsicht auf die Abdeckung 21 zu sehen, bei der der Stift 20 zum besseren Verständnis nicht dargestellt ist. Insbesondere aus Fig. 3 geht dabei hervor, dass die Abdeckung 21 das Antriebs-Zahnrad 18 lediglich teilweise umgibt, derart, dass die Abdeckung 21 seitlich offen ausgebildet ist, so dass das Antriebs-Zahnrad 18 an der offenen Seite aus der Abdeckung 21 radial herausragt.

Der Steller 6 weist ferner eine Abtriebswelle 25 auf, die achsparallel zur Antriebswelle 17 und radial beabstandet zur Antriebswelle 17 angeordnet ist. Die Abtriebswelle 25 ist im Steller 6 drehbar gelagert, wobei ein Ausgangs-Zahnrad 26 drehfest an der Abtriebswelle 25 angebracht ist. Die Abtriebswelle 25 wird mittels des Ausgangs-Zahnrads 26 gedreht, um ein solches Stellorgan 5 zu verstellen. Hierbei wird der Antrieb des Stellmotors 16 über das Ausgangs-Zahnrad 26 auf die Abtriebswelle 25 übertragen. Hierzu weist der Steller 6 einen Abtriebs-Zwischentrieb 27 auf, der koaxial zur Abtriebswelle 25 angeordnet und relativ zur Abtriebswelle 25 drehbar gelagert ist.

Der Antriebs-Zwischentrieb 19 weist ein erstes Antriebs-Zahnrad 28 sowie ein zweites Antriebs-Zahnrad 29 auf. Die Antriebs-Zahnräder 28, 29 sind axial benachbart und drehfest miteinander verbunden, wobei der Antriebs-Zwischentrieb 19 im gezeigten Beispiel einstückig bzw. materialeinheitlich ausgebildet ist. Dabei weisen die Antriebs-Zahnräder 28, 29 unterschiedliche Außendurchmesser auf.

Der Abtriebs-Zwischentrieb 27 weist ein erstes Abtriebs-Zahnrad 30 und ein zweites Abtriebs-Zahnrad 31 auf. Die Abtriebs-Zahnräder 30, 31 sind axial benachbart und drehfest miteinander verbunden, wobei der Abtriebs-Zwischentrieb 31 im gezeigten Beispiel einstückig bzw. materialeinheitlich ausgebildet ist. Dabei weisen das erste Abtriebs-Zahnrad 30 und das zweite Abtriebs-Zahnrad 31 unterschiedliche Außendurchmesser auf.

Das Eingangs-Zahnrad 18 steht mit dem ersten Abtriebs-Zahnrad 30 des Abtriebs-Zwischentriebs 27 in Eingriff, derart, dass das Eingangs-Zahnrad 18 das erste Abtriebs-Zahnrad 30 antreibt. Infolge dessen dreht sich das zweite Abtriebs-Zahnrad 31, das mit dem axial benachbarten ersten Antriebs-Zahnrad 28 in Eingriff steht. Die Drehung des relativ zur Abtriebswelle 25 drehbar gelagerten Abtriebs-Zwischentriebs 27 führt zu einer entsprechenden Drehung des ersten Antriebs-Zahnrads 28, das mit dem zweiten Abtriebs-Zahnrad 31 in Eingriff steht. In der Folge dreht sich das zweite Antriebs-Zahnrad 29. Das zweite Antriebs-Zahnrad 29 steht mit dem Ausgangs-Zahnrad 26 in Eingriff, so dass die Drehung des relativ zur Antriebswelle 17 drehbar gelagerten Antriebs-Zwischentriebs 19 zu einer entsprechenden Drehung des Ausgangs-Zahnrads 26 führt. Hierdurch wird die Abtriebswelle 25, an der das Ausgangs-Zahnrad 26 drehfest angebracht ist, entsprechend gedreht, wobei diese Drehung zum Verstellen eines solchen Stellorgans 5 eingesetzt wird. Das Eingangs-Zahnrad 18 und das Ausgangs-Zahnrad 26 realisieren zusammen mit den Zwischentrieben 19, 27 also ein Getriebe 47, das vorliegend dreistufig ausgebildet ist, wobei hierzu lediglich zwei radial voneinander beabstandete Wellen 17, 25 notwendig sind. Im Getriebe 47 bildet das Eingangs-Zahnrad 18 das erste Glied und das Ausgangs-Zahnrad 26 das letzte Glied der Zahnräder 18, 26, 28, 29, 30, 31.

Dabei ist zu erkennen, dass die miteinander in Eingriff stehenden Zahnräder 18, 26, 28, 29, 30, 31 unterschiedliche Außendurchmesser und eine unterschiedliche Anzahl an Zähnen aufweisen. Das Eingangs-Zahnrad 18 weist also einen kleineren Außendurchmesser auf und hat eine kleinere Anzahl an Zähnen als das erste Abtriebs-Zahnrad 30, so dass das Eingangs-Zahnrad 18 als ein Eingangs-Ritzel 32 fungiert. Das zweite Abtriebs-Zahnrad 31 weist einen kleineren Außendurchmesser auf als das mit dem zweiten Abtriebs-Zahnrad 31 in Eingriff stehende erste Antriebs-Zahnrad 28. Dementsprechend handelt es sich beim zweiten Abtriebs-Zahnrad 31 um ein Abtriebs-Ritzel 33. Zudem ist das zweite Antriebs-Zahnrad 29 hinsichtlich des Außendurchmessers kleiner als das Ausgangs-Zahnrad 26, so dass das zweite Antriebs-Zahnrad 29 als AntriebsRitzel 34 fungiert. Wie insbesondere aus Fig. 4 hervorgeht, ist ferner zu erkennen, dass das jeweilige Ritzel 32, 33, 34 eine geringere Anzahl an Zähnen aufweist als das zugehörige Zahnrad 26, 28, 30. Aus Fig. 4 geht ferner hervor, dass das Ausgangs-Zahnrad 26 als ein Zahnradsegment 35 ausgebildet ist, das sich in Umfangsrichtung um weniger als 180° erstreckt.

Wie in Fig. 2 zu erkennen ist, weist der Steller 6 ein Stellergehäuse 36 auf, das ein erstes Gehäuseteil 37, beispielsweise einen Gehäusetopf 37', und ein das erste Gehäuseteil 37 verschließendes oder abdeckendes zweites Gehäuseteil 38, beispielsweise einen Gehäusedeckel 38', umfasst. Der Stellmotor 16, das Eingangs-Zahnrad 18, das Ausgangs-Zahnrad 26 sowie die Zwischentriebe 19, 27 sind im ersten Gehäuseteil 37 angeordnet. Die Abtriebswelle 25 ist durch das zweite Gehäuseteil 38 geführt und mittels einer Lagereinrichtung 39, die ein Lagerelement 39' wie ein Kugellager 39" aufweisen kann, drehbar gelagert. Die Abtriebswelle 25 durchragt also das Stellergehäuse 36, wobei das Drehmoment der Abtriebswelle 25 außerhalb des Stellergehäuses 36 zum Verstellen des Stellorgans 5 eingesetzt wird. Im gezeigten Beispiel ist die Lagereinrichtung 39 im zweiten Gehäuseteil 38 aufgenommen, wobei die Abtriebswelle 25 zusätzlich über eine vom Stellergehäuse 36 separate Lagereinrichtung 45 im ersten Gehäuseteil 37 drehbar gelagert ist. Die Lagereinrichtung 45 ist insbesondere eine Gleitlagereinrichtung 45', in der die Abtriebswelle 25 gleitend gelagert ist. Auf der vom ersten Gehäuseteil 37 axial abgewandten Seite des Kugellagers 39 ist ferner eine Ringdichtung 40 vorgesehen. Die Abtriebswelle 25 ist am axial vom zweiten Gehäuseteil 38 abgewandten Ende mit einem Magnet 41 versehen, der drehfest an der Abtriebswelle 25 angebracht ist. Der drehfest an der Abtriebswelle 25 angebrachte Magnet 41 wirkt mit einem Magnetsensor 42 zusammen, um beispielsweise eine Drehzahl und/oder Drehgeschwindigkeit und/oder einen Drehwinkel der Abtriebswelle 25 zu bestimmen. Der Magnetsensor 42 ist über einen Anschlusspin 43, der in einer Anschlussbuchse 44 angeordnet ist, mit einer nicht gezeigten Steuerung verbindbar, an die die von dem Magnetsensor 42 ermittelten Daten übermittelt werden. Der Magnetsensor 42 ist hierbei auf der dem Magnet 41 zugewandten Seite des ersten Gehäuseteils 37 dem Magnet 41 gegenüberliegend im ersten Gehäuseteil 37 angebracht. Die Lagereinrichtung 45 und der Magnetsensor 42 sind dabei am gleichen Gehäuseteil 37 angebracht. Dabei ist die Abtriebswelle 25 in einem dem Magnetsensor 42 zugewandten bzw. benachbarten Abschnitt mittels der Lagereinrichtung 45 im ersten Gehäuseteil 37 gelagert.

Aus den Fig. 2 und 3 geht ferner hervor, dass die Abdeckung 21 einstückig, d.h. insbesondere materialeinheitlich, ausgebildet ist. Dabei ist die offene Seite der Abdeckung 21 dem radial benachbarten ersten Abtriebs-Zahnrad 30 zugewandt, so dass das Eingangs-Zahnrad 18 und das erste Abtriebs-Zahnrad 30 problemlos ineinandergreifen. Ferner ist zu erkennen, dass die Abdeckung 21 und das erste Gehäuseteil 37 auch einstückig bzw. materialeinheitlich ausgebildet sind. Das Stellergehäuse 36 kann hierbei aus Kunststoff hergestellt sein, wobei es insbesondere vorstellbar ist, das erste Gehäuseteil 37 und/oder das zweite Gehäuseteil 38 als Spritzgussteile herzustellen.

Aus Fig. 2 geht ferner hervor, dass der Stift 20 drehfest im zweiten Gehäuseteil 38 angeordnet ist. Hierzu kann der Stift 20 in das zweite Gehäuseteil 38 eingespritzt, eingeklebt oder eingepresst sein. Dabei ist es vorstellbar, den Stift 20 zusätzlich zur radialen Lagerung in der Lageröffnung 24 der Abdeckung 21 im ersten Gehäuseteil 37 radial zu lagern.

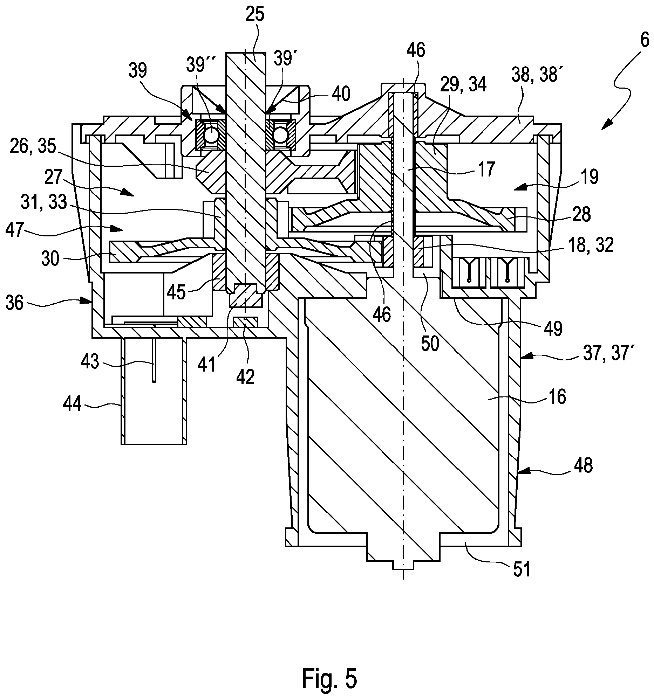

In Fig. 5 ist ein anderes Ausführungsbeispiel des Stellers 6 dargestellt. Dieses Ausführungsbeispiel unterscheidet sich von dem in den Fig. 2 bis 4 gezeigten Ausführungsbeispiel insbesondere dadurch, dass der Antriebs-Zwischentrieb 19 an der Antriebswelle 17 relativ zur Antriebswelle 17 drehbar gelagert ist. Dabei erstreckt sich die Antriebswelle 17 bis in das zweite Gehäuseteil 38 hinein und ist im zweiten Gehäuseteil 38 drehbar gelagert. Hierzu ist radial zwischen dem zweiten Gehäuseteil 38 und der Antriebswelle 17 eine Lagereinrichtung 46 vorgesehen. Dementsprechend entfällt der Stift 20 aus Fig. 2. Auch ist in diesem Ausführungsbeispiel keine Abdeckung 21 vorgesehen.

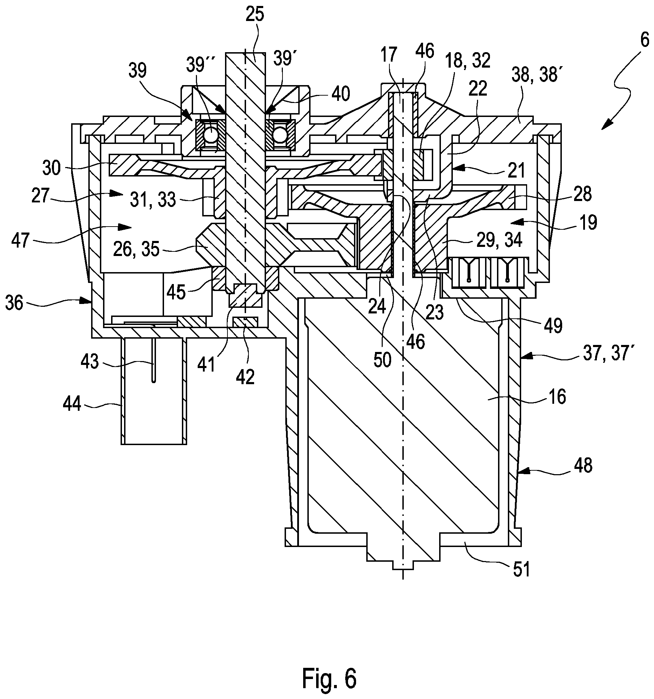

Ein weiteres Ausführungsbeispiel des Stellers 6 ist in Fig. 6 dargestellt. Dieses Ausführungsbeispiel unterscheidet sich von dem in Fig. 5 gezeigten Ausführungsbeispiel insbesondere dadurch, dass axial zwischen dem Eingangs-Zahnrad 18 und dem Stellmotor 16 der Antriebs-Zwischentrieb 19 angeordnet ist. Das heißt, dass Eingangs-Zahnrad 18 und Antriebs-Zwischentrieb 19 im Vergleich zu Fig. 5 in Axialrichtung umgekehrt angeordnet sind. Dementsprechend sind auch Ausgangs-Zahnrad 26 und Abtriebs-Zwischentrieb 27 in Axialrichtung umgekehrt angeordnet.

Bei allen gezeigten Ausführungsbeispielen des Stellers 6 bilden die Zwischentriebe 19, 27 zusammen mit Eingangs-Zahnrad 18 und Ausgangs-Zahnrad 26 also ein dreistufiges Getriebe 47. Dabei ist es selbstverständlich möglich, durch die Hinzunahme weiterer Antriebs-Zwischentriebe 19 und Abtriebs-Zwischentriebe 27 Getriebe 47 mit höheren Stufen zu realisieren, wobei hierzu die Anzahl der Antriebs-Zwischentriebe 19 bevorzugt der Anzahl der Abtriebs-Zwischentriebe 27 entspricht. Eine Erhöhung der Stufe des Getriebes 47 führt hierbei nicht zu einer Ausdehnung des Stellers 6 in Radialrichtung. Das heißt, dass der Bauraumbedarf des Stellers 6, insbesondere in Radialrichtung, klein gehalten wird. Darüber hinaus entfallen zusätzliche Wellen zum Lagern weiterer Zwischentriebe 19, 27, so dass auch das Gewicht des Stellers 6 reduziert ist.

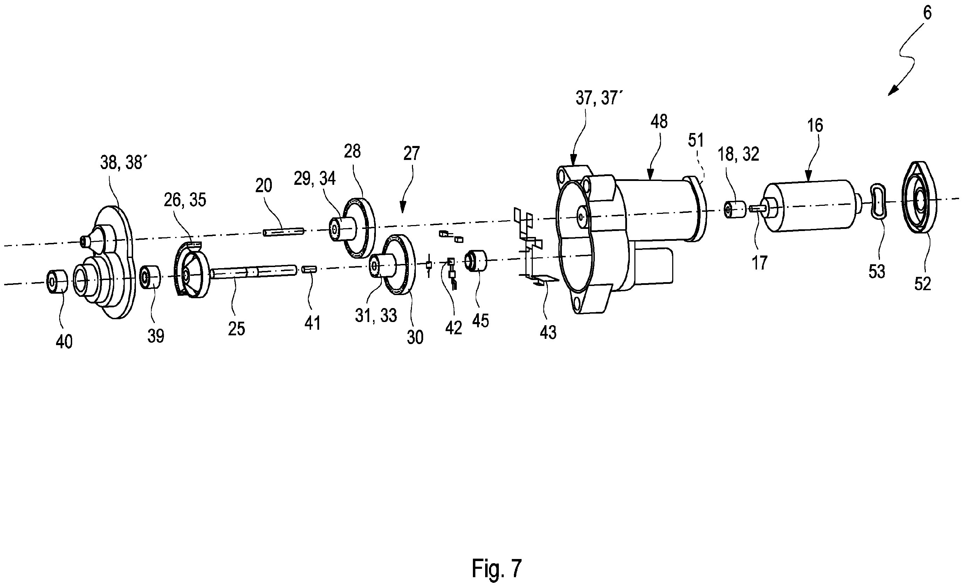

Bei den gezeigten Beispielen weist das erste Gehäuseteil 37 bzw. der Gehäusetopf 37' einen Topf 48 auf, in dem der Stellmotor 16 angeordnet ist. Der Topf 48 weist einen Topfboden 49 mit einer Topföffnung 50 für die Antriebswelle 17 auf, durch die die Antriebswelle 17 geführt ist. Der Topf 48 ist auf der dem Topfboden 49 gegenüberliegenden und somit vom zweiten Gehäuseteil 38 abgewandten Seite offen ausgebildet bzw. weist auf dieser Seite eine Montageöffnung 51 auf. Durch die Montageöffnung 51 wird der Stellmotor 16 bei der Montage des Stellers 6 in das erste Gehäuseteil 37 eingeschoben und somit montiert. Somit werden, wie in Fig. 7 zu sehen ist, der Stellmotor 16 mit der Antriebswelle 17 und dem Eingangszahnrad 18 durch die Montageöffnung 51 in das Stellergehäuse 36 montiert, während die Abtriebswelle 25, die Zwischentriebe 19, 27 sowie gegebenenfalls der Stift 20 von der abgewandten Seite des Gehäuses 36 in das Stellergehäuse 36 montiert werden. Dies führt neben einer einfachen Montage des Stellers 6 zu einer vorteilhaften und exakten Ausrichtung des Stellmotors 16. Diese Ausrichtung ist in den Beispielen weiter verbessert, in denen die Abtriebswelle 25 und/oder der Stift 20 im ersten Gehäuseteil 37 gelagert sind, also insbesondere beim in den Fig. 2 und 7 gezeigten Beispiel.

Wie insbesondere aus Fig. 7 hervorgeht, kann die Montageöffnung 51 nach der Montage des Stellmotors 16 mit einem Deckel 52 verschlossen werden, wobei axial zwischen dem Stellmotor 16 und dem Deckel 52 ein Federelement 53 angeordnet sein kann.

Bei dem in Fig. 2 und Fig. 6 gezeigten Beispiel ist die Abdeckung 21 auf der von der Montageöffnung 51 abgewandten Seite des Topfbodens 49 von einem Rand der Topföffnung 50 in Richtung des Stifts 20 abstehend ausgebildet. Dabei sind die Topföffnung 50 und die Lageröffnung 24 fluchtend, insbesondere koaxial angeordnet.

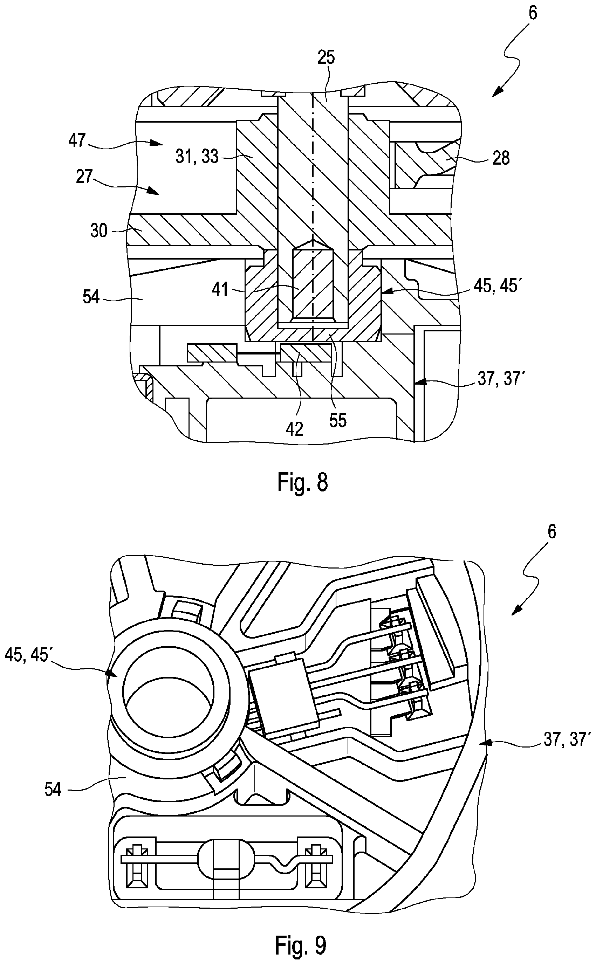

Die Figuren 8 und 9 zeigen einen Ausschnitt aus Fig. 2 im Bereich des Magnets 41 und des Magnetsensors 42 bei einem weiteren Ausführungsbeispiel des Stellers 6. Bei diesem Ausführungsbeispiel ist die Lagereinrichtung 45 in einem ringsegmentartigen Lagerabschnitt 54 des ersten Gehäuseteils 37 aufgenommen. Der Lagerabschnitt 54 ist im gezeigten Beispiel einstückig am ersten Gehäuseteil 37 ausgeformt, insbesondere daran gespritzt. Die Lagereinrichtung 45 ist topfförmig sowie hin zur Abtriebswelle 25 offen ausgebildet und weist einen dem Magnetsensor 42 zugewandten und axial vom Magnetsensor 42 beabstandeten Lagerboden 55 auf. Das axial dem Magnetsensor 42 zugewandte Ende der Abtriebswelle 25 sowie der in der Abtriebswelle 25 aufgenommene Magnet 42 sind in der Lagereinrichtung 45 angeordnet. Dies ermöglicht es insbesondere, den Magnetsensor 42 nachträglich zu montieren bzw. in das Stellergehäuse 36 einzubringen. Der Lagerboden 55 ist geschlossen ausgebildet und trennt somit den Magnet 41 vom Magnetsensor 42. Somit wird insbesondere eine den Magnetsensor 42 beschädigende elektrostatische Entladung verhindert oder zumindest reduziert.

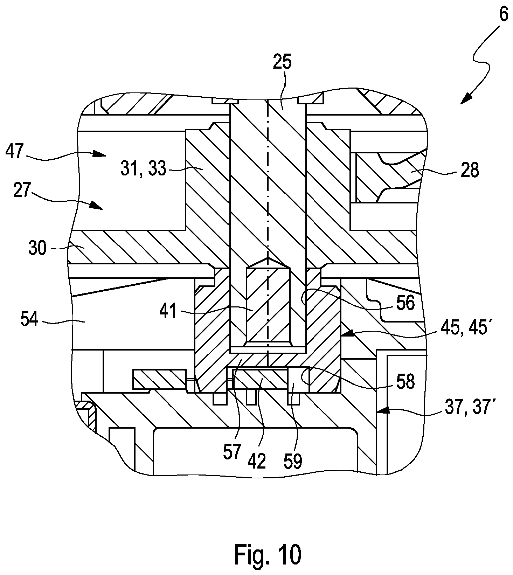

Beim in Fig. 10 gezeigten Ausführungsbeispiel ist die Lagereinrichtung 45 mit einem in Fig. 10 sichtbaren H-förmigen Querschnitt ausgebildet. Somit weist die Lagereinrichtung 45 einen ersten Lagertopf 56 auf, der hin zur Abtriebswelle 25 offen ist und in dem das axial der Lagereinrichtung 45 zugewandte Ende der Abtriebswelle 25 samt darin aufgenommenem Magnet 41 gelagert ist. Der erste Lagertopf 56 ist durch eine Trennwand 57 von einem zweiten Lagertopf 58 der Lagereinrichtung 45 getrennt, der hin zum Magnetsensor 42 offen ist und den Magnetsensor 42 umgibt. Die Trennwand 57 ist bevorzugt geschlossen ausgebildet und sorgt für einen Schutz des Magnetsensors 42 gegenüber elektrostatischen Entladungen. Dabei schlägt die Lagereinrichtung 45 mit dem zweiten Lagertopf 58 axial am ersten Gehäuseteil 37 an. Am zweiten Lagertopf 58 ist eine radiale Durchführöffnung 59 vorgesehen, durch die der Magnetsensor 42 montiert und/oder Verbindungen des Magnetsensors 42 geführt sein können.

## Patentansprüche

1. Kraftfahrzeug (1) mit wenigstens einem Stellorgan (5) und zumindest einem Steller (6) zum Verstellen zumindest eines solchen Stellorgans (5), wobei
- der Steller (5) einen Stellmotor (16) aufweist, der eine Antriebswelle (17) aufweist,
- der Steller (5) eine Abtriebswelle (25) aufweist, die achsparallel und radial beabstandet zur Antriebswelle (17) drehbar gelagert ist,
- das Stellorgan (5) zum Verstellen des Stellorgans (5) mit der Abtriebswelle (25) eines solchen Stellers (6) antriebsverbunden ist
- der Steller (5) ein drehfest an der Antriebswelle (17) angebrachten Eingangs-Zahnrad (18) aufweist,
- der Steller (5) ein drehfest an der Abtriebswelle (25) angebrachten Ausgangs-Zahnrad (26) aufweist,
- der Steller (5) zumindest einen Antriebs-Zwischentrieb (19) aufweist, der ein erstes Antriebs-Zahnrad (28) und ein zweites Antriebs-Zahnrad (29) aufweist, die axial benachbart angeordnet und drehfest miteinander verbunden sind,
- der Steller (5) zumindest einen Abtriebs-Zwischentrieb (27) aufweist, der ein erstes Abtriebs-Zahnrad (30) und ein zweites Abtriebs-Zahnrad (31) aufweist, die axial benachbart angeordnet und drehfest miteinander verbunden sind,
- der jeweilige Antriebs-Zwischentrieb (19) achsparallel zur Antriebswelle (17) angeordnet und relativ zu Antriebswelle (17) drehbar gelagert ist,
**dadurch gekennzeichnet,**
- **dass** der jeweilige Abtriebs-Zwischentrieb (27) koaxial zur Abtriebswelle (25) angeordnet und relativ zur Abtriebswelle (25) drehbar gelagert ist,
- **dass** eins der Antriebs-Zahnräder (28, 29) eines solchen Antriebs-Zwischentriebs (19) mit dem Ausgangs-Zahnrad (26) in Eingriff steht und eins der Abtriebs-Zahnräder (30, 31) eines solchen Abtriebs-Zwischentriebs (27) mit dem Eingangs-Zahnrad (18) in Eingriff steht,
- **dass** die übrigen Antriebs-Zahnräder (28, 29) jeweils mit einem solchen Abtriebs-Zahnrad (30, 31) in Eingriff stehen,
- **dass** axial zwischen dem Eingangs-Zahnrad (18) und dem Stellmotor (16) zumindest ein solcher Antriebs-Zwischentrieb (19) angeordnet ist,
- **dass** zumindest eins der Zahnräder (18, 26, 28, 29, 30, 31) als ein Zahnradsegment (35) ausgebildet ist, das sich in Umfangsrichtung um weniger als 360° erstreckt.

2. Kraftfahrzeug nach Anspruch 1,
**dadurch gekennzeichnet,**
**dass** zumindest ein solcher Antriebs-Zwischentrieb (19) koaxial zur Antriebswelle (17) angeordnet ist.

3. Kraftfahrzeug nach Anspruch 1 oder 2,
**dadurch gekennzeichnet,**
**dass** der Stellmotor (16) koaxial zur Antriebswelle (17) angeordnet ist.

4. Kraftfahrzeug nach einem der Ansprüche 1 bis 3,
**dadurch gekennzeichnet,**
**dass** zumindest ein solcher Zwischentrieb (19, 27) an der zugehörigen Welle (17, 25) drehbar gelagert ist.

5. Kraftfahrzeug nach einem der Ansprüche 1 bis 4,
**dadurch gekennzeichnet,**
**dass** wenigstens ein solcher Zwischentrieb (19, 27) an einem drehfest im Steller (6) angeordneten Stift (20) gelagert ist.

6. Kraftfahrzeug nach einem der Ansprüche 1 bis 5,
**dadurch gekennzeichnet,**
**dass** der jeweilige Antriebs-Zwischentrieb (19) mit dem axial nächstbenachbarten Abtriebs-Zwischentrieb (27) in Eingriff steht.

7. Kraftfahrzeug nach einem der Ansprüche 1 bis 6,
**dadurch gekennzeichnet,**
**dass** das Eingangs-Zahnrad (18) und das Ausgangs-Zahnrad (26) an axial gegenüberliegenden Seiten angeordnet sind.

8. Kraftfahrzeug nach einem der Ansprüche 1 bis 7,
**gekennzeichnet durch**,
dass ein Stellergehäuse (36) in dem die Zwischentriebe (19, 27) angeordnet sind.

9. Kraftfahrzeug nach Anspruch 8,
**dadurch gekennzeichnet,**
**dass** das Stellergehäuse (36) ein erstes Gehäuseteil (37) und ein das erste Gehäuseteil (37) verschließendes zweites Gehäuseteil (38) aufweist, wobei die Abtriebswelle (25) in wenigstens einem der Gehäuseteile (37, 38) drehbar gelagert ist.

10. Kraftfahrzeug nach Anspruch 9,
**dadurch gekennzeichnet,**
**dass** das erste Gehäuseteil (37) einen Topf (48) aufweist, in dem der Stellmotor (16) angeordnet ist, wobei der Topf (48) auf der dem zweiten Gehäuseteil (38) zugewandten Seite einen Topfboden (49) mit einer Topföffnung (50) und eine der Topföffnung (50) gegenüberliegende Montageöffnung (51) zum Montieren des Stellmotors (16) in den Topf (48) aufweist.

11. Kraftfahrzeug nach einem der Ansprüche 1 bis 10,
**dadurch gekennzeichnet,**
**dass** der Steller (6) einen an der Abtriebswelle (25) drehfest angebrachten Magnet (41) und einen Magnetsensor (42) zur Bestimmung eines Drehwinkels der Abtriebswelle (25) aufweist.

12. Kraftfahrzeug nach Anspruch 11
**dadurch gekennzeichnet,**
**dass** der Steller (6) eine vom Stellergehäuse (36) separate Lagereinrichtung (45) zum Lagern der Abtriebswelle (25) aufweist, die am einem der Gehäuseteile (37, 38) angebracht ist und ein diesem Gehäuseteil (37, 38) zugewandtes axiales Ende der Abtriebswelle (25) sowie den Magnet (41) aufnimmt.

13. Kraftfahrzeug nach Anspruch 12,
**dadurch gekennzeichnet,**
**dass** die Lagereinrichtung (45) einen Lagerboden (55) aufweist, der axial zwischen dem Magnet (41) und dem Magnetsensor (42) und axial beabstandet zum Magnetsensor (42) angeordnet ist.

14. Kraftfahrzeug nach Anspruch 12,
**dadurch gekennzeichnet,**
**dass** die Lagereinrichtung (45) einen ersten Lagertopf (56) und einen zweiten Lagertopf (58) aufweist, die axial durch eine Trennwand (57) der Lagereinrichtung (45) getrennt sind, wobei das Ende der Abtriebswelle (25) und der Magnet (41) im ersten Lagertopf (56) gelagert sind und der zweite Lagertopf (58) den Magnetsensor (42) zumindest teilweise umgibt.

15. Kraftfahrzeug nach einem der Ansprüche 1 bis 14,
**dadurch gekennzeichnet,**
**dass** das Kraftfahrzeug (1) einen Abgasturbolader (10) aufweist und das Stellorgan (5) eine variable Turbinengeometrie (13) oder ein Wastegateventil (15) des Abgasturboladers (10) oder ein Ventil einer Flutentrennung des Abgasturboladers (10) ist.

16. Kraftfahrzeug nach einem der Ansprüche 1 bis 15,
**dadurch gekennzeichnet,**
**dass** das Kraftfahrzeug (1) eine Frischluftanlage (3) zum Zuführen von Frischluft zu einer Brennkraftmaschine (2) des Kraftfahrzeugs (1) aufweist, wobei das Stellorgan (5) eine Klappe (4) der Frischluftanlage (3) zur Dosierung der Frischluftzufuhr zur Brennkraftmaschine (2) ist.

17. Kraftfahrzeug nach einem der Ansprüche 1 bis 16,
**dadurch gekennzeichnet,**
**dass** das Kraftfahrzeug (1) eine Abgasrückführeinrichtung (8) zum Rückführen von Abgas zu einer Brennkraftmaschine (2) des Kraftfahrzeugs (1) aufweist, wobei das Stellorgan (5) ein Rückführventil (9) zum Dosieren der Abgasrückfuhr zur Brennkraftmaschine (2) ist.

## Claims

1. Motor vehicle (1) comprising at least one actuating element (5) and at least one actuator (6) for adjusting at least one such actuating element (5), wherein
- the actuator (5) has a servomotor (16), which has a driveshaft (17),
- the actuator (5) has an output shaft (25), which is rotatably mounted axially parallel to and spaced apart from the driveshaft (17),
- the actuating element (5) is drivingly connected with the output shaft (25) of one such actuator (6) for adjusting the actuating element (5),
- the actuator (5) has an input gear (18) that is non-rotatably attached to the drive shaft (17),
- the actuator (5) has an output gear (26) that is non-rotatably attached to the output shaft (25),
- the actuator (5) has at least one drive intermediate unit (19), which has a first input gear (28) and a second input gear (29), which are arranged axially adjacent and are non-rotatably connected to each other,
- the actuator (5) has at least one output intermediate unit (27) which has a first output gear (30) and a second output gear (31), which are arranged axially adjacent and are non-rotatably connected to each other,
- the respective drive intermediate unit (19) is arranged axially parallel to the drive shaft (17) and is rotatably mounted relative to the drive shaft (17),
**characterised in**
- **that** the respective output intermediate unit (27) is arranged coaxially to the output shaft (25) and is rotatably mounted relative to the output shaft (25),
- **that** one of the input gears (28, 29) of one such drive intermediate unit (19) is in engagement with the output gear (26) and one of the output gears (30, 31) of one such output intermediate unit (27) is in engagement with the input gear (18),
- **that** the remaining input gears (28, 29) are each in engagement with one such output gear (30, 31),
- **that** at least one such drive intermediate unit (19) is arranged axially between the input gear (18) and the servomotor (16),
- **that** at least one of the gears (18, 26, 28, 29, 30, 31) is configured as a gear segment (35), which extends by less than 360° in the circumferential direction.

2. Motor vehicle according to claim 1,
**characterised in**
**that** in that at least one such drive intermediate unit (19) is arranged coaxially with the drive shaft (17).

3. Motor vehicle according to claim 1 or 2,
**characterised in**
**that** the servomotor (16) is arranged coaxially with the drive shaft (17).

4. Motor vehicle according to any one of claims 1 to 3,
**characterised in**
**that** at least one such intermediate unit (19, 27) is rotatably mounted on the associated shaft (17, 25).

5. Motor vehicle according to any one of claims 1 to 4,
**characterised in**
**that** at least one such intermediate unit (19, 27) is mounted on a pin (20) that is non-rotatably arranged in the actuator (6).

6. Motor vehicle according to any one of claims 1 to 5,
**characterised in**
**that** the respective drive intermediate unit (19) is in engagement with the axially adjacent output intermediate unit (27).

7. Motor vehicle cording to any one of claims 1 to 6,
**characterised in**
**that** the input gear (18) and the output gear (26) are arranged on axially opposite sides.

8. Motor vehicle according to any one of claims 1 to 7,
**characterised by**
that an actuator housing (36) in which the intermediate units (19, 27) are arranged.

9. Motor vehicle according to claim 8,
**characterised in**
**that** the actuator housing (36) has a first housing part (37) and a second housing part (38) that closes the first housing part (37), the output shaft (25) being rotatably mounted in at least one of the housing parts (37, 38).

10. Motor vehicle according to claim 9,
**characterised in**
**that** the first housing part (37) has a pot (48) in which the servomotor (16) is arranged, the pot (48) having, on the side facing the second housing part (38), a pot base (49) having a pot opening (50) and, opposite to the pot opening (50), a mounting opening (51) for mounting the servomotor (16) in the pot (48).

11. Motor vehicle according to anyone of claims at 1 to 10,
**characterised in**
**that** the actuator (6) has a magnet (41) non-rotatably attached to the output shaft (25) and a magnetic sensor (42) for determining a rotational angle of the output shaft (25).

12. Motor vehicle according to claim 11,
**characterised in**
**that** the actuator (6) has a bearing arrangement (45) that is separate from the actuator housing (36) for supporting the output shaft (25), which bearing arrangement is attached to one of the housing parts (37, 38) and receives an axial end of the output shaft (25) facing this housing part (37, 38) and the magnet (41).

13. Motor vehicle according to claim 12,
**characterised in**
**that** the bearing arrangement (45) has a bearing base (55), which is arranged axially between the magnet (41) and the magnetic sensor (42), and axially spaced apart from the magnetic sensor (42).

14. Motor vehicle according to claim 12,
**characterised in**
**that** the bearing arrangement (45) has a first bearing pot (56) and a second bearing pot (58), which are axially separated by a partition wall (57) of the bearing arrangement (45), wherein the end of the output shaft (25) and the magnet (41) are mounted in the first bearing pot (56), and the second bearing pot (58) at least partially surrounds the magnetic sensor (42).

15. Motor vehicle according to any one of claims 1 to 14,
**characterised in**
**that** the motor vehicle (1) has an exhaust turbocharger (10), and the actuating element (5) is a variable turbine geometry (13) or a wastegate valve (15) of the exhaust turbocharger (10) or a valve of a flow separator of the exhaust turbocharger (10).

16. Motor vehicle according to any one of claims 1 to 15,
**characterised in**
**that** the motor vehicle (1) has a fresh air system (3) for feeding fresh air to an internal combustion engine (2) of the motor vehicle (1), wherein the actuating element (5) is a valve (4) of the fresh air system (3) for dosing the fresh air feed to the internal combustion engine (2).

17. Motor vehicle according to any one of claims 1 to 16,
**characterised in**
**that** the motor vehicle (1) has an exhaust gas recirculation device (8) for recirculating exhaust gas to an internal combustion engine (2) of the motor vehicle (1), wherein the actuating element (5) is a recirculation valve (9) for dosing exhaust gas recirculation to the internal combustion engine (2).

## Revendications

1. Véhicule automobile (1) avec au moins un organe de réglage (5) et au moins un actionneur (6) destiné à régler au moins un organe de réglage (5) de ce type, dans lequel
- l'actionneur (5) présente un moteur de réglage (16) qui présente un arbre moteur (17),
- l'actionneur (5) présente un arbre mené (25) qui est monté de manière à pouvoir tourner parallèlement à l'axe et à une certaine distance radiale de l'arbre moteur (17),
- l'organe de réglage (5) destiné à régler l'organe de réglage (5) est relié pour l'entraînement à l'arbre mené (25) d'un actionneur (6) de ce type
- l'actionneur (5) présente une roue dentée d'entrée (18) montée solidaire en rotation sur l'arbre moteur (17),
- l'actionneur (5) présente une roue dentée de sortie (26) montée solidaire en rotation sur l'arbre mené (25),
- l'actionneur (5) présente au moins une transmission intermédiaire motrice (19) qui présente une première roue dentée motrice (28) et une deuxième roue dentée motrice (29) qui sont agencées axialement l'une à côté de l'autre et qui sont reliées l'une à l'autre de manière solidaire en rotation,
- l'actionneur (5) présente au moins une transmission intermédiaire menée (27) qui présente une première roue dentée menée (30) et une deuxième roue dentée menée (31) qui sont agencées axialement l'une à côté de l'autre et qui sont reliées l'une à l'autre de manière solidaire en rotation,
- la transmission intermédiaire motrice (19) respective est agencée parallèlement à l'axe par rapport à l'arbre moteur (17) et est montée de manière à pouvoir tourner par rapport à l'arbre moteur (17),
**caractérisé en ce**
- **que** la transmission intermédiaire menée (27) respective est agencée coaxialement par rapport à l'arbre mené (25) et est montée de manière à pouvoir tourner par rapport à l'arbre mené (25),
- **que** l'une des roues dentées motrices (28, 29) d'une transmission intermédiaire motrice (19) de ce type est en prise avec la roue dentée de sortie (26) et l'une des roues dentées menées (30, 31) d'une transmission intermédiaire menée (27) de ce type est en prise avec la roue dentée d'entrée (18),
- **que** les autres roues dentées motrices (28, 29) sont en prise à chaque fois avec une roue dentée menée (30, 31) de ce type,
- **qu'**au moins une transmission intermédiaire motrice (19) de ce type est agencée axialement entre la roue dentée d'entrée (18) et le moteur de réglage (16),
- **qu'**au moins l'une des roues dentées (18, 26, 28, 29, 30, 31) est réalisée comme un segment de roue dentée (35) qui s'étend sur moins de 360° en direction circonférentielle.

2. Véhicule automobile selon la revendication 1,
**caractérisé en ce**
**qu'**au moins une transmission intermédiaire motrice (19) de ce type est agencée coaxialement par rapport à l'arbre moteur (17).

3. Véhicule automobile selon la revendication 1 ou 2,
**caractérisé en ce**
**que** le moteur de réglage (16) est agencé coaxialement par rapport à l'arbre moteur (17).

4. Véhicule automobile selon l'une quelconque des revendications 1 à 3,
**caractérisé en ce**
**qu'**au moins une transmission intermédiaire (19, 27) de ce type est montée de manière à pouvoir tourner sur l'arbre (17, 25) associé.

5. Véhicule automobile selon l'une quelconque des revendications 1 à 4,
**caractérisé en ce**
**qu'**au moins une transmission intermédiaire (19, 27) de ce type est montée sur une tige (20) agencée solidaire en rotation dans l'actionneur (6).

6. Véhicule automobile selon l'une quelconque des revendications 1 à 5,
**caractérisé en ce**
**que** la transmission intermédiaire motrice (19) respective est en prise avec la transmission intermédiaire menée (27) axialement la plus proche.

7. Véhicule automobile selon l'une quelconque des revendications 1 à 6,
**caractérisé en ce**
**que** la roue dentée d'entrée (18) et la roue dentée de sortie (26) sont agencées sur des côtés axialement opposés.

8. Véhicule automobile selon l'une quelconque des revendications 1 à 7,
**caractérisé par**
qu'un carter d'actionneur (36) dans lequel les transmissions intermédiaires (19, 27) sont agencées.

9. Véhicule automobile selon la revendication 8,
**caractérisé en ce**
**que** le carter d'actionneur (36) présente une première partie de carter (37) et une deuxième partie de carter (38) qui ferme la première partie de carter (37), dans lequel l'arbre mené (25) est monté de manière à pouvoir tourner dans au moins l'une des parties de carter (37, 38).

10. Véhicule automobile selon la revendication 9,
**caractérisé en ce**
**que** la première partie de carter (37) présente un pot (48) dans lequel le moteur de réglage (16) est agencé, dans lequel le pot (48) présente, sur le côté tourné vers la deuxième partie de carter (38), un fond de pot (49) avec une ouverture de pot (50) et une ouverture de montage (51), à l'opposé de l'ouverture de pot (50), en vue du montage du moteur de réglage (16) dans le pot (48).

11. Véhicule automobile selon l'une quelconque des revendications 1 à 10, **caractérisé en ce**
**que** l'actionneur (6) présente un aimant (41) monté solidaire en rotation sur l'arbre mené (25) et un capteur magnétique (42) destiné à déterminer un angle de rotation de l'arbre mené (25).

12. Véhicule automobile selon la revendication 11
**caractérisé en ce**
**que** l'actionneur (6) présente un dispositif de palier (45) séparé du carter d'actionneur (36) et destiné à loger l'arbre mené (25), lequel dispositif de palier est monté au niveau de l'une des parties de carter (37, 38) et reçoit une extrémité axiale, tournée vers cette partie de carter (37, 38), de l'arbre mené (25) ainsi que l'aimant (41).

13. Véhicule automobile selon la revendication 12,
**caractérisé en ce**
**que** le dispositif de palier (45) présente un fond de palier (55) qui est agencé axialement entre l'aimant (41) et le capteur magnétique (42) et à une certaine distance axiale du capteur magnétique (42).

14. Véhicule automobile selon la revendication 12,
**caractérisé en ce**
**que** le dispositif de palier (45) présente un premier pot de palier (56) et un deuxième pot de palier (58) qui sont séparés axialement par une cloison de séparation (57) du dispositif de palier (45), dans lequel l'extrémité de l'arbre mené (25) et l'aimant (41) sont logés dans le premier pot de palier (56) et le deuxième pot de palier (58) entoure au moins partiellement le capteur magnétique (42).

15. Véhicule automobile selon l'une quelconque des revendications 1 à 14, **caractérisé en ce**
**que** le véhicule automobile (1) présente un turbocompresseur à gaz d'échappement (10) et l'organe de réglage (5) est une géométrie de turbine variable (13) ou une soupape de décharge (15) du turbocompresseur à gaz d'échappement (10) ou une soupape d'une séparation de flux du turbocompresseur à gaz d'échappement (10).

16. Véhicule automobile selon l'une quelconque des revendications 1 à 15, **caractérisé en ce**
**que** le véhicule automobile (1) présente une installation d'air frais (3) pour l'amenée d'air frais à un moteur à combustion interne (2) du véhicule automobile (1), dans lequel l'organe de réglage (5) est un clapet (4) de l'installation d'air frais (3) pour le dosage de l'amenée d'air frais au moteur à combustion interne (2).

17. Véhicule automobile selon l'une quelconque des revendications 1 à 16, **caractérisé en ce**
**que** le véhicule automobile (1) présente un dispositif de recyclage de gaz d'échappement (8) pour le recyclage de gaz d'échappement vers un moteur à combustion interne (2) du véhicule automobile (1), dans lequel l'organe de réglage (5) est une soupape de recyclage (9) pour le dosage du recyclage de gaz d'échappement vers le moteur à combustion interne (2).
